# EUROPÄISCHE PATENTANMELDUNG

(11) **EP 0 936 478 A1**
(43) Veröffentlichungstag der Anmeldung: **18.08.1999**
(21) Anmeldenummer: 98102681.8
(22) Anmeldetag: 17.02.1998
(51) Int. Cl.: G02B 6/00, F16L 55/165, H02G 1/08, G02B 6/44

(54) **Vorrichtung zum Montieren einer Innenbride in einem nichtbegehbaren Rohr**

(71) Anmelder: KA-TE System AG, CH-8041 Zürich (CH); Hecht, Reinhard, 93047 Regensburg (DE); Manstorfer, Karl, 93047 Regensburg (DE)
(72) Erfinder: Wyder, Hans c/o Novita Engineering, 8617 Mönchaltorf (CH); Haüsermann, Christian c/o Novita Engineering, 8617 Mönchaltorf (CH); Hecht, Reinhard, c/o IK-T, 93047 Regensburg (DE); Manstorfer, Karl, c/o IK-T, 93047 Regensburg (DE); Bunschi, Hans,Dr.sc.tech., c/o KA-TE System AG, 8041 Zürich (CH); Weingarten,Marco, c/o KA-TE System AG, 8041 Zürich (CH)
(74) Vertreter: Patentanwälte Schaad, Balass, Menzl & Partner AG

(57) **Zusammenfassung**

Die Vorrichtung (10) zum Montieren einer Innenbride (12) in einem nichtbegehbaren Rohr (14) weist ein in Rohrlängsrichtung ferngesteuert bewegbares Kanalroboterfahrzeug auf, an dem stirnseitig eine Arbeitseinheit (30) befestigt ist. Diese weist ein Aufnahmeelement (64) auf, das zum Halten der Innenbride (12) mittels der am Bridenband (108) befestigten Klammer (76) bestimmt ist. Weiter ist die Arbeitseinheit (30) an einem Halteelement (88) versehen, dessen Haltebacken (96) das Bridenband im Endbereich (108') erfassen. Durch Drehen des Halteelements (88) um die Längsachse (18') sowie Bewegen des Halteelements (88) und des Aufnahmeelements (64) in radialer Richtung gegen aussen, wird die Innenbride (12) aufgeweitet, bis sie an der Rohrinnenwand (14') anliegt. Nach dem Entriegeln eines Spannverschlusses (104') der Innenbride (12) wird diese von der Arbeitseinheit (30) freigegeben, welche nun für die Montage einer weiteren Innenbride (12) bereit ist.

## Beschreibung

Die vorliegende Erfindung betrifft eine Vorrichtung zum Montieren einer Innenbride in einem nicht begehbaren Rohr.

Aus der DE-U-29 700 912 ist es bekannt, Lichtwellenleiterkabel in nichtbegehbaren Kanal- oder Rohrsystemen zu verlegen und mittels innenbridenartig ausgebildeten Befestigungselementen an der Rohrinnenwand zu befestigen. Die Verwendung derartiger Befestigungselemente hat den Vorteil, dass das Rohr nicht beschädigt werden muss, was beispielsweise beim Andübeln notwendig wäre. Als Befestigungsmittel der Befestigungselemente werden federvorgespannte Edelstahlringe vorgeschlagen, die sich an der Innenwand des Rohres andrücken und zweckmässigerweise über einen Umfangswinkelbereich von wenigstens 180° an der Rohrinnenwand anliegen. Zum Einsetzen dieser offenen Edelstahlringe in das Rohr kann ein mit einer Kamera ausgestatteter selbstfahrender, ferngesteuerter Roboter verwendet werden, der die vorgefertigten Befestigungsmittel aus einem mitgeführten Magazin entnimmt und in das Rohr einsetzt. Aufbau und Funktionsweise des Roboters im Detail gehen aber aus diesem Dokument nicht hervor. Weiter ist auch nicht offenbart, wie die geschlossenen Edelstahlringe in das Rohr eingesetzt werden können.

Es ist Aufgabe der vorliegenden Erfindung, eine Vorrichtung zum Montieren einer Innenbride in einem nichtbegehbaren Rohr zu schaffen.

Diese Aufgabe wird mit einer Vorrichtung, die die Merkmale im Anspruch 1 aufweist, gelöst.

Mittels der Vorrichtung wird in zwei unterschiedlichen Abschnitten der Innenbride auf diese eingewirkt, um diese in Umfangsrichtung gesehen aufzuweiten und so im Rohr zu montieren.

Die Vorrichtung ist insbesondere geeignet, eine in sich geschlossene Innenbride zu montieren, wie sie in der zeitgleichen CH-Patentanmeldung, betitelt: 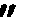 Bride mit Spannverschluss" (Vertreterzeichen: A 12298 CH) offenbart ist. Bezüglich Aufbau und Funktionsweise dieser Innenbride wird ausdrücklich auf diese Patentanmeldung verwiesen.

Besonders bevorzugte Ausbildungsformen der Vorrichtung sind in den abhängigen Ansprüchen definiert.

Die Erfindung wird nun anhand eines in der Zeichnung dargestellten Ausführungsbeispiels näher erläutert. Es zeigen rein schematisch:
- Fig. 1: in Ansicht einen Teil einer in einem längsgeschnitten gezeigten Rohr angeordneten Vorrichtung mit einer Arbeitseinheit zum Montieren einer Innenbride;
- Fig. 2: gegenüber Fig. 1 vergrössert, ebenfalls in Ansicht und teilweise geschnitten einen Teil der dort gezeigten Vorrichtung;
- Fig. 3: in Seitenansicht und stark vereinfacht einen Teil der in den Fig. 1 und 2 gezeigten Arbeitseinheit;
- Fig. 4: einen horizontalen Längsschnitt durch die in den Fig. 1 bis 3 gezeigte Arbeitseinheit;
- Fig. 5: in Seitenansicht die Arbeitseinheit mit einer Innenbride im Vormontagezustand;
- Fig. 6: in gleicher Darstellung wie Fig. 5 die Arbeitseinheit, mit der mittels dieser aufgeweiteten Innenbride;
- Fig. 7: in Ansicht eine wagenartig ausgebildete, an die Arbeitseinheit angekuppelte Magazineinheit;
- Fig. 8: die in Fig. 7 gezeigte Magazineinheit teilweise geschnitten;
- Fig. 9: die Magazineinheit in einem Schnitt entlang der Linie IX-IX der Fig. 7; und
- Fig.10: in Seitenansicht in Richtung des Pfeiles X der Fig. 7 und teilweise geschnitten die Magazineinheit.

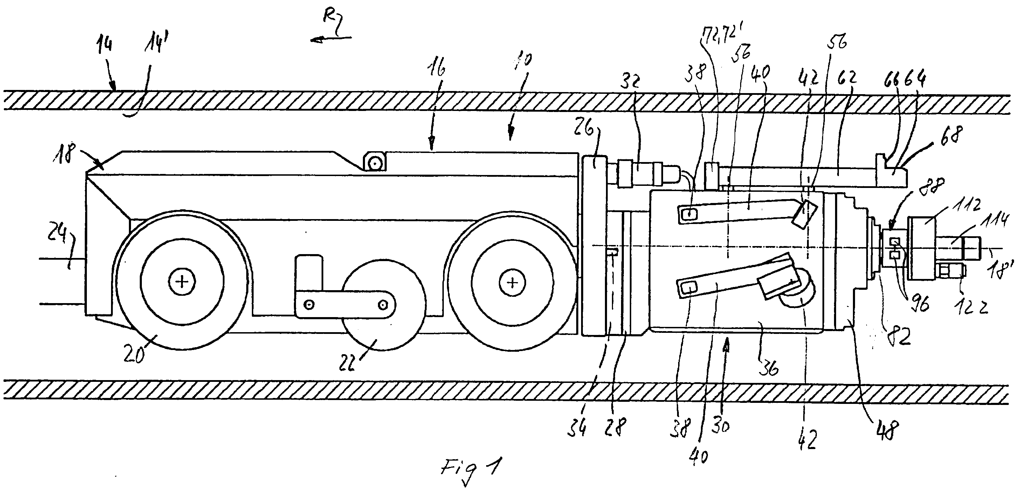

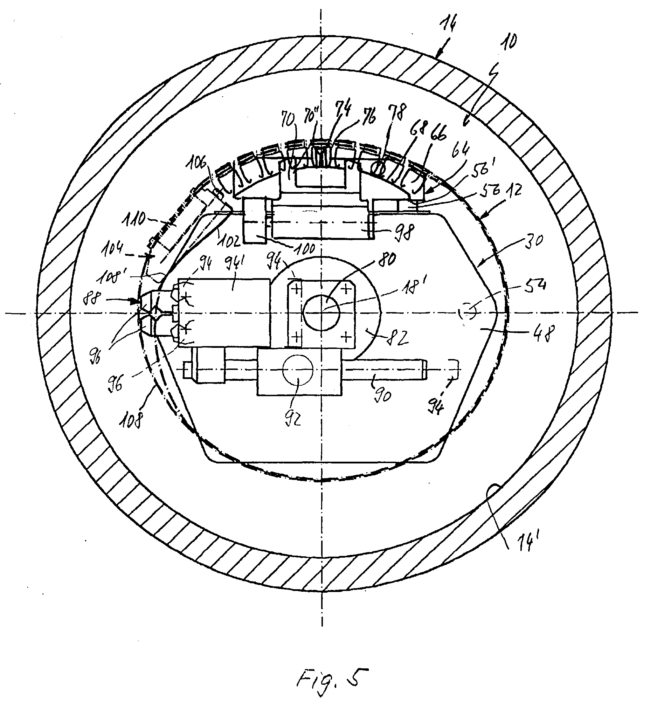

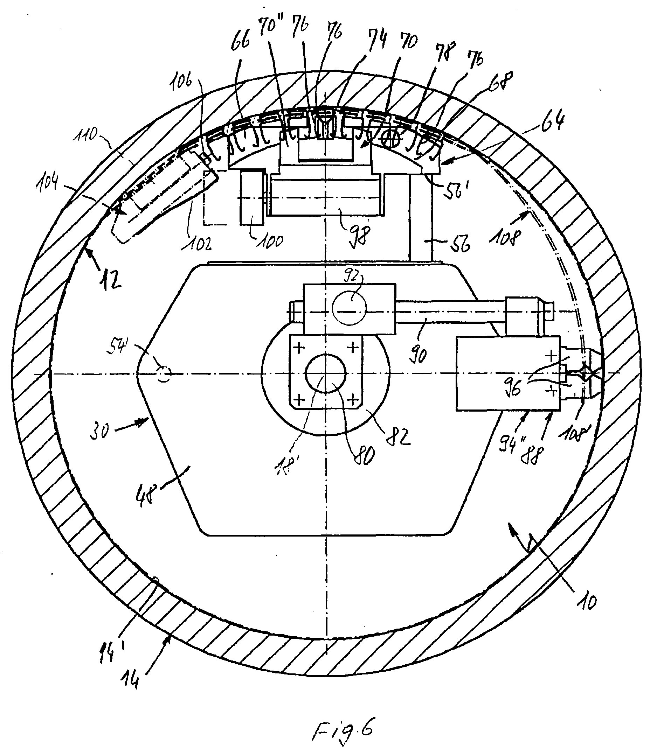

Die in den Fig. 1 bis 6 gezeigte Vorrichtung 10 ist zum Montieren einer in den Fig. 5 und 6 gezeigten Innenbride 12 in einem nicht begehbaren Rohr 14, beispielsweise einem Abwasserrohr, bestimmt. Der besseren Übersichtlichkeit halber ist in der Fig. 1 die Innenbride 12 nicht dargestellt. Ein Gestell 16 der Vorrichtung 10 weist ein ferngesteuertes, selbstfahrendes Kanalroboterfahrzeug 18 auf, das über Räder 20 an der Rohrinnenwand 14' abgestützt ist und mittels eines im Kanalroboterfahrzeug 18 angeordneten Antriebsaggregats für die Räder 20 in Rohrlängsrichtung R bewegbar ist. Seitlich des Kanalroboterfahrzeugs 18 ist an diesem ein Messrad 20 frei drehbar gelagert, das ebenfalls an der Rohrinnenwand 14 anliegt und mit einem Drehsensor verbunden ist, der zur Bestimmung des Ortes der Vorrichtung 10 im Rohr 14 seine Signale über ein Signal- und Speisekabel 24 an eine ausserhalb des Rohrsystems angeordnete Überwachungs- und Steuereinrichtung weitergibt.

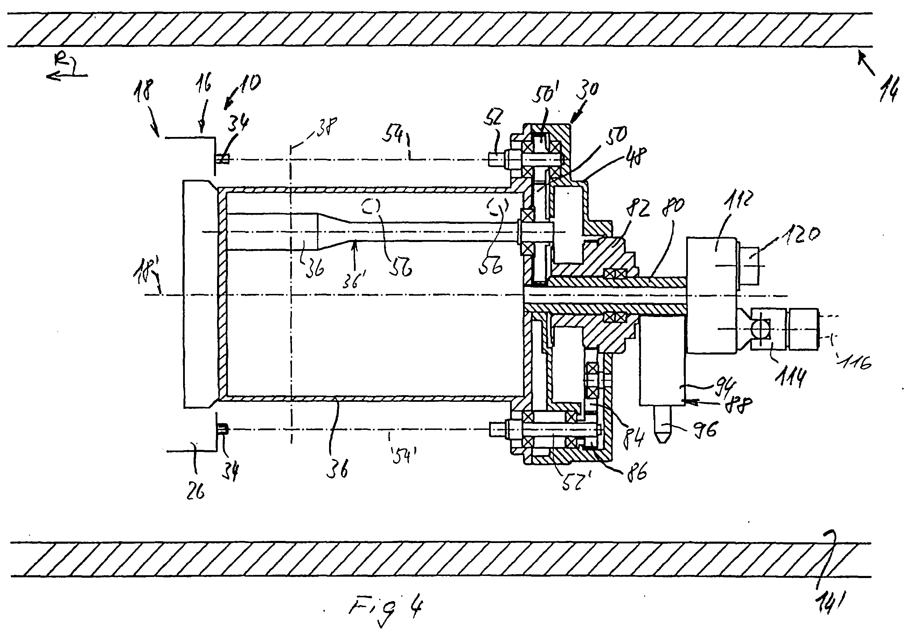

An der dem Signal- und Speisekabel 24 abgewandten Stirnseite des Kanalroboterfahrzeugs 18 ist ein Drehteller 26 um die Längsachse 18' des Kanalroboterfahrzeugs drehbar gelagert. Im Kanalroboterfahrzeug 18 ist in bekannter Art und Weise ein Drehantrieb für den Drehteller 26 angeordnet. Über einen verriegelbaren Bajonettverschluss 28 ist am Drehteller 26 auslegerartig eine Arbeitseinheit 30 befestigt. Am Drehteller 26 sind weiter Anschlüsse 32 für Steuer-, Speise- und Signalleitungen sowie eine Druckluftspeiseleitung angeordnet. Weiter sind am Drehteller 26, wie dies in der Fig. 4 schematisch angedeutet ist, einander etwa diametral gegenüberliegend zwei Abgangswellen 34 drehbar gelagert, die in bekannter Art und Weise mit Antriebsaggregaten im Kanalroboterfahrzeug 18 verbunden sind.

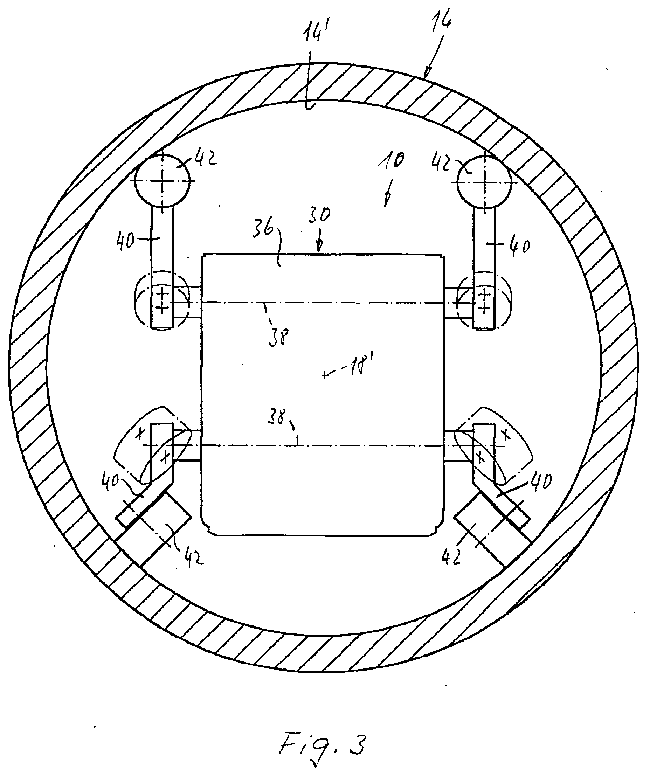

Die Arbeitseinheit 30 weist ein annähernd quaderförmiges Gehäuse 36 auf, das am ihm zugewandten Teil des Bajonettverschlusses 28 befestigt ist. Am Gehäuse 36 sind zwei parallele, rechtwinklig zur Längsachse 18' verlaufende Stützwellen 38 drehbar gelagert, die an ihren beidseits über das Gehäuse 36 vorstehenden Enden Stützhebel 40 tragen, an deren Enden je eine Stützrolle 42 frei drehbar gelagert ist. Im Innern des Gehäuses 36 sitzt auf jeder Stützwelle 38 drehfest ein Schneckenradsegment 44. Die beiden Schneckenradsegmente 44 kämmen mit einer Schnecke 46, die an einer in Richtung der Längsachse 18' verlaufenden, am Gehäuse 36 frei drehbar gelagerten Schneckenwelle 46', ausgebildet ist. Auf der dem Bajonettverschluss 28 abgewandten Stirnseite des Gehäuses 36 sitzt deckelartig ein Getriebedeckel 48, das zusammen mit der Gehäusestirnwand seitlich über die Seitenwände des Gehäuses 36 vorsteht. Auf einem in den vom Gehäuse 36 und dem Getriebegehäuse 48 begrenzten Raum vorstehenden Stumme der Schneckenwelle 46' sitzt ein Zahnrad 50, das mit einem Antriebsrad 50' kämmt, das auf einer Ankoppelwelle 52 sitzt, die im einen seitlich über das Gehäuse 36 vorstehenden Bereich des Getriebegehäuses 48 frei drehbar gelagert ist. Die Ankoppelwelle 52 ist über eine strichpunktiert angedeutete Verbindungswelle 54 mit der entsprechenden, am Drehteller 26 gelagerten Abgangswelle 34 verbunden. Durch Antrieb dieser Abgangswelle 34 mittels des entsprechenden, im Kanalroboterfahrzeug 18 angeordneten Antriebsaggregats, können die Stützhebel 40 aus einer in der Fig. 1 mit ausgezogenen Linien und in der Fig. 3 mit strichpunktierten Linien gezeigten Ruhestellung, in welcher sie etwa in Richtung der Längsachse 18' verlaufen, in eine in der Fig. 3 mit ausgezogenen Linien gezeigte Stützstellung verschwenkt werden, in welcher die Stützrollen 42 sich an der Rohrinnenwand 14' abstützen. Dadurch wird erreicht, dass die Längsachse 18' bezüglich des Rohres 14 zentriert ist. Wie dies der Fig. 3 entnehmbar ist, verlaufen in Stützstellung der Stützhebel 40 die Achsen der obenliegenden Stützrollen 42 wenigstens annähernd parallel zur Längsachse 18' und jene der untenliegenden Stützrollen 42 rechtwinklig zur Längsachse 18'. Dadurch ist eine Verletzung der Rohrinnenwand 14' vermieden und gleichzeitig die Vorrichtung 10 bezüglich dem Rohr 14 blockiert. Diese Lagerung der Stützrollen 42 lässt bei geringfügigem Zurückverschwenken der Stützhebel 40 aus der Stützstellung eine axiale Justierung der Lage der Vorrichtung 10 durch entsprechenden Antrieb des Kanalroboterfahrzeugs 18 zu.

Am Gehäuse 36 sind weiter zwei parallele, rechtwinklig zur Längsachse 18' und in der gezeigten Lage des Drehtellers 26 in vertikaler Richtung verlaufende Schäfte 56 verschiebbar gelagert. Im Innern des Gehäuses 36 sind die beiden Schäfte 56 über ein Profil 58 miteinander verbunden, welches seinerseits mit zwei parallel geschalteten, am Gehäuse 36 befestigten Zylinder-Kolbenaggregaten 60 verbunden ist. An den beiden auf der Oberseite des Gehäuses 36 aus diesem hervorstehenden Schaftenden 56' ist ein in Richtung der Längsachse 18' verlaufender Träger 62 befestigt, der an seinem freien Ende ein Aufnahmeelement 64 trägt, das zum Halten einer Innenbride 12 bestimmt ist. Das Aufnahmeelement 64 ist im Querschnitt L-förmig ausgebildet und weist eine rechtwinklig zur Längsachse 18' angeordnete Anschlagfläche 66 und eine kreiszylindersegmentartige Mantelfläche 68 auf, wie dies aus der Zusammenschau mit den Fig. 5 und 6 hervorgeht. Weiter ist am Aufnahmeelement 64 ein Bridenhaltehebel 70 schwenkbar gelagert, der mittels eines am anderen Ende des Trägers 62 angeordneten Zylinder-Kolbenaggregats 72 von einer Ruhestellung 70', in welcher er in radialer Richtung gegen innen hinter die Mantelfläche 68 verschwenkt ist, in eine Haltestellung 70'' in welcher er mit seinem freien Ende in radialer Richtung gegen aussen über die Mantelfläche 68 vorsteht, um unter Zusammenwirken mit der Anschlagfläche 66 eine Innenbride 12 zu halten, und wieder zurückverbringbar. In Umfangsrichtung gesehen im Mittelbereich, weist das Aufnahmeelement 64 eine Haltenase 74 auf, die dazu bestimmt ist, in eine Klammer 76 der Innenbride 12 einzugreifen und diese in Umfangsrichtung gesehen formschlüssig festzuhalten.

Weiter ist im Aufnahmeelement 64 ein Stössel 78 verschiebbar gelagert, welcher mittels eines neben dem Zylinder-Kolbenaggregat 72 angeordneten weiteren Zylinder-Kolbenaggregat 72' mit einer in Richtung gegen hinten, d.h. entgegen der Pfeilrichtung R, vorn gerichteten Kraft beaufschlagbar ist. Mittels dieses Stössels 78 wird nach der Montage der Innenbride 12 deren Sitz im Rohr 14 überprüft.

Mittels der Zylinder-Kolbenaggregate 60 ist das Aufnahmeelement 64 von einer in den Fig. 1, 2 und 5 gezeigten, beim Gehäuse 36 liegenden Aufnahmeposition, in radialer Richtung gegen aussen in eine in der Fig. 6 gezeigte Montageposition und wieder zurück bewegbar.

Am Getriebegehäuse 48 ist koaxial zur Längsachse 18' ein Hohlschaft 80 befestigt, auf dem ein Lagerkörper 82 frei drehbar gelagert ist. Mit dem Lagerkörper 82 kämmt ein ebenfalls im Getriebegehäuse 48 gelagertes Zwischenrad 84, das seinerseits mit einem Antriebsrad 86 kämmt. Dieses sitzt auf einer am Getriebegehäuse 48 frei drehbar gelagerten weiteren Ankopplungswelle 52', die ihrerseits über eine in der Fig. 4 strichpunktiert angedeutete weitere Verbindungswelle 54' mit der zweiten Abgangswelle 34 am Drehteller 26 verbunden ist. Durch Antreiben dieser Abgangswelle 34 mittels des am Kanalroboterfahrzeugs 18 angeordneten Antriebsaggregats lässt sich der Lagerkörper 82 drehen. An ihm ist ein zangenartig ausgebildetes Halteelement 88 über Führungsstangen 90 geführt, bezüglich der Längsachse 18' in radialer Richtung verschiebbar gelagert. Durch den Hohlschaft 80 verlaufen von einer nicht gezeigten Steuerventilbatterie im Gehäuse 36 Pneumatikleitungen u.a. zu einem schematisch angedeuteten Zylinder-Kolbenaggregat 92, welches das Halteelement 88 von einer in der Fig. 5 strichelt angedeuteten, radial innenliegenden Ausgangslage 94 in radialer Richtung nach aussen in eine in der Fig. 5 mit ausgezogenen Linien gezeigte Eingriffslage 94' und dann weiter in eine Öffnungslage 94'', wie sie in der Fig. 6 angedeutet ist, und wieder zurück bewegt.

Das Halteelement 88 weist zwei ebenfalls pneumatisch gesteuerte Haltebacken 96 auf, die um parallel zur Längsachse 18' verlaufende Achsen von einer Offenstellung, wie sie in der Fig. 5 gestrichelt angedeutet ist, in eine mit ausgezogenen Linien gezeigte Schliessstellung verschwenkbar sind.

Wie dies die Fig. 5 und 6 zeigen, ist am Aufnahmeelement 64 auf der radial innenliegenden Seite ein weiteres Zylinder-Kolbenaggregat 98 befestigt, auf dessen Kolbenstange eine Schlagmasse 100 sitzt. Diese ist dazu bestimmt, einen Verriegelungsbügel 102 eines Spannverschlusses 104 der Innenbride 12 von einer Verriegelungsstellung in eine einen Verriegelungsschaft 106 freigebende Stellung zu bewegen.

Wie dies in der gleichentags eingereichten Patentanmeldung, betitelt: 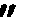 Bride mit Spannverschluss" (Vertreterzeichen: A 12298 CH) ausführlich offenbart ist, weist die Innenbride 12 ein Bridenband 108 auf, an dem einerends der Spannverschluss 104 befestigt ist, das zu einem Ring gebogen mit einem mittleren Abschnitt durch den Spannverschluss 104 hindurch verläuft und des andernends mit einer Zunge 108' in den Spannverschluss 104 hineinragt. Im an die Zunge 108' anschliessenden Endbereich weist das Bridenband 108 zwei Durchlässe auf, in welche die Haltebacken 96 zum formschlüssigen Halten des Bridenbandes 108 eingreifen können. Weiter sind am Bridenband 108 benachbart zum Spannverschluss 104, in Umfangsrichtung gesehen hintereinander und in kleinem Abstand, eine bestimmte Anzahl, beispielsweise neun Klammern 76 befestigt. Diese sind dazu bestimmt, später Kabel oder Schutzrohre für Kabel, insbesondere Lichtwellenleiterkabel, aufzunehmen und zu halten. Die Innenbride 12 liegt mit den Klammern 76 an der Mantelfläche 68 auf, wobei die mittlere Klammer 96 die Haltenase 74 umgreift und die Innenbride 112 in axialer Richtung durch das Zusammenwirken der Anschlagfläche 66 und dem Bridenhaltehebel 70 gehalten ist. Von dieser in der Fig. 5 gezeigten Ausgangslage wird die Innenbride 12 durch Antrieb des Aufnahmeelements 64 in radialer Richtung gegen aussen sowie Antrieb des Halteelements 88 sowohl in radialer Richtung gegen aussen als auch im Gegenuhrzeigersinn, wird die Innenbride 12 aufgeweitet, bis sie an der Rohrinnenwand 14' zur Anlage kommt. Dies ist in der Fig. 6 gezeigt.

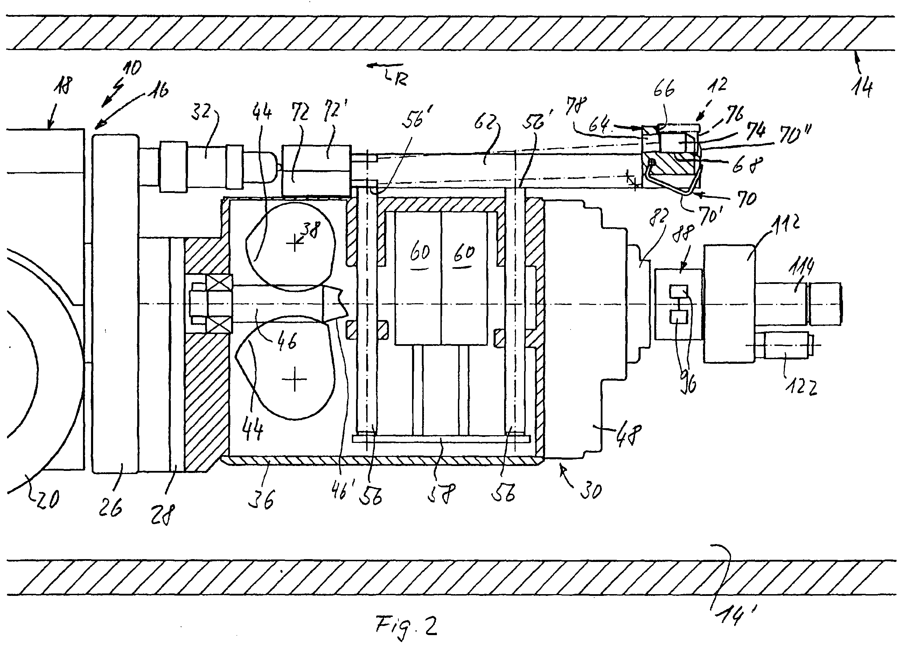

Im Spannverschluss 104 wird über den Verriegelungsschaft 106 und den Verriegelungsbügel 102 eine Druckfeder gespannt gehalten, welche einerseits am Gehäuse des Spannverschlusses 104 abgestützt ist und andererseits mit einem schematisch angedeuteten Freilauf 110 zusammenwirkt. Dieser ist beim Aufweiten der Innenbride 112 mittels der Vorrichtung 10 aktiv. Im aufgeweiteten Zustand der Innenbride 112 wird nun das weitere Zylinder-Kolbenaggregat 98 kurz angesteuert, um mittels der Schlagmasse 100 den Verriegelungsschaft 106 freizugeben, wodurch unter der Wirkung der Feder des Spannverschlusses 104 und dem nun in-aktivem Freilauf 110 das Bridenband 108 auf Druck beansprucht wird, und dadurch zum kraftschlüssigen Halten an die Rohrinnenwand 14' angedrückt wird. Nun werden die Haltebacken 96 geöffnet, wodurch das diesseitige Ende 108' des Bridenbandes 108 freigegeben wird. Weiter wird der Bridenhaltehebel 70 in Ruhestellung 70' (siehe Fig. 2) überführt und wird der Stössel 78 aktiviert. Dieser versucht durch Einwirken auf die Klammern 96 die Innenbride 12' in axialer Richtung zu verschieben. Gelingt dies nicht, ist der feste Sitz der Innenbride 12' garantiert.

Am Gehäuse 36 ist eine allgemein bekannte, schwenkbare, nicht gezeigte TV-Kamera angeordnet, mittels der die Funktion der Arbeitseinheit an der Überwachungs- und Steuereinheit überwacht werden kann.

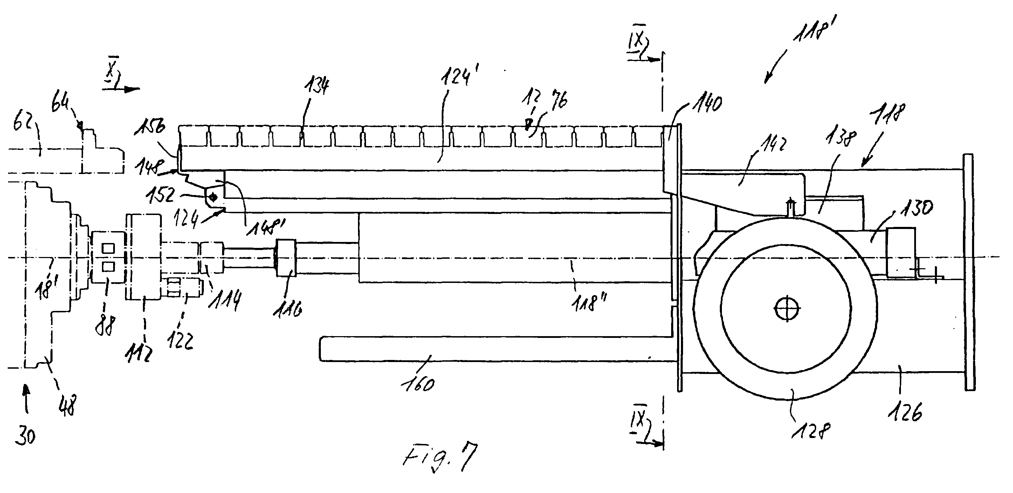

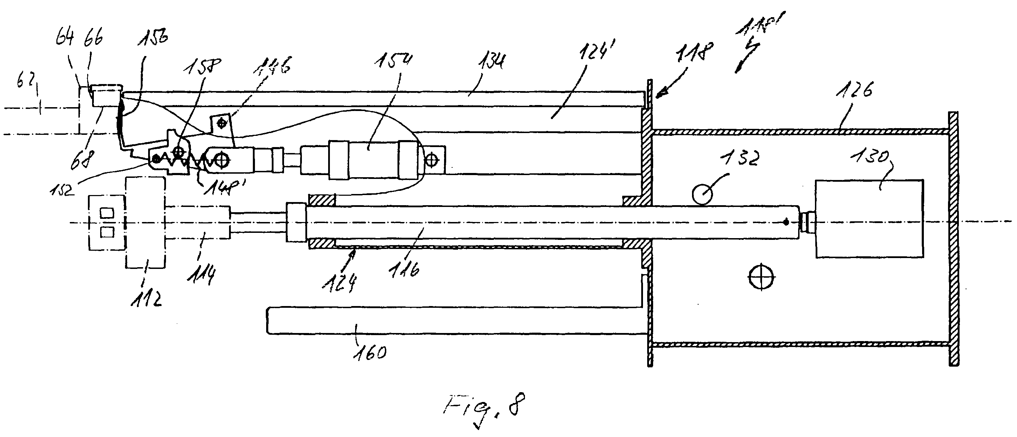

Am freien Ende des Hohlschaftes 80 ist eine Ankoppeldose 112 befestigt, an der das eine Ende eines Kardangelenks 114 befestigt ist, dessen anderes Ende, wie aus den Fig. 7 und 8 hervorgeht, an einen Anlenkstab 116 einer als Magazinwagen 118 ausgebildeten Magazineinheit 118' drehfest ankoppelbar ist. Neben dem Kardangelenk 114 weist die Ankoppeldose 112 eine Steckdose 120 für Steuer- und Signalleitungen zum und vom Magazinwagen 118 sowie mittig unterhalb des Kardangelenks 114 und der Steckdose 120 eine Pneumatikkupplung 122 auf, die zur Speisung der Ventile und Zylinder-Kolbenaggregate des Magazinwagens 118 dient.

Wie dies insbesondere aus der Fig. 8 hervorgeht, ist der in Längsrichtung 118'' des Magazinwagens 118 verlaufende Anlenkstab 116 in einem profilartigen Trägergehäuse 124 in Längsrichtung verschiebbar gelagert. Das Trägergehäuse 124 ist auf der der Arbeitseinheit 30 abgewandten Seite an einem Wagenkasten 126 befestigt, der über Räder 128 an der Rohrinnenwand 114 verfahrbar gelagert ist und in dem ein Zylinder-Kolbenaggregat 130 angeordnet ist, das mit dem diesseitigen Ende des Anlenkstabs 116 zusammenwirkt. Der Anlenkstab 116 ist mit dem Kolben des Zylinder-Kolbenaggregats 130 hubfest aber drehbar verbunden. Weiter ist im Wagenkasten 126 ein mit dem Anlenkstab 116 zusammenwirkender Sensor 132 angeordnet, um die Verdrehlage des Wagenkastens 126 und somit des Trägergehäuses 124 bezüglich der Arbeitseinheit 30 festzustellen. Mittels des Zylinder-Kolbenaggregats 130 kann der Magazinwagen 118 aus einer in der Fig. 7 gezeigten Ruhestellung, in welcher das Trägergehäuse 124 vom Aufnahmeelement 64 der Arbeitseinheit 30 beabstandet ist, in eine in der Fig. 8 angedeutete Übergabestellung, in welcher das freie Ende des Trägergehäuses 124 sich beim Aufnahmeelement 64 befindet, verschoben und wieder zurückbewegt werden.

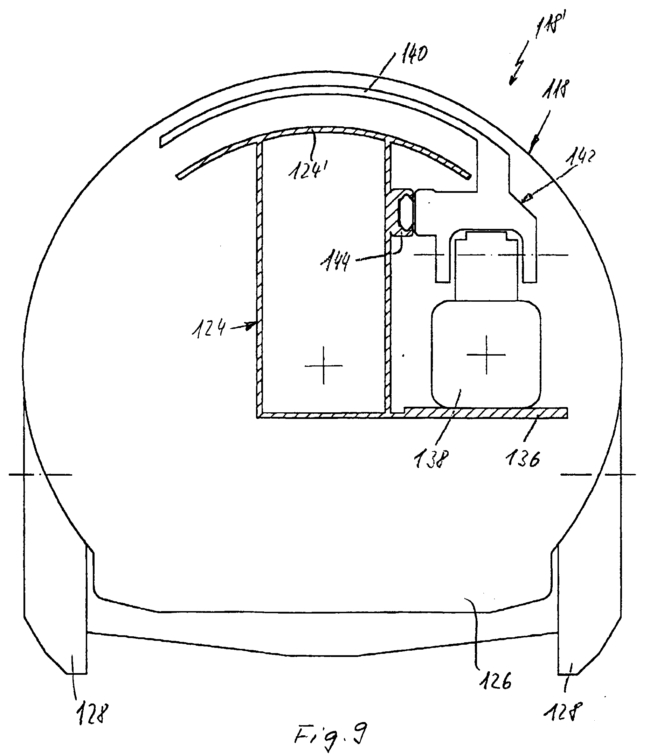

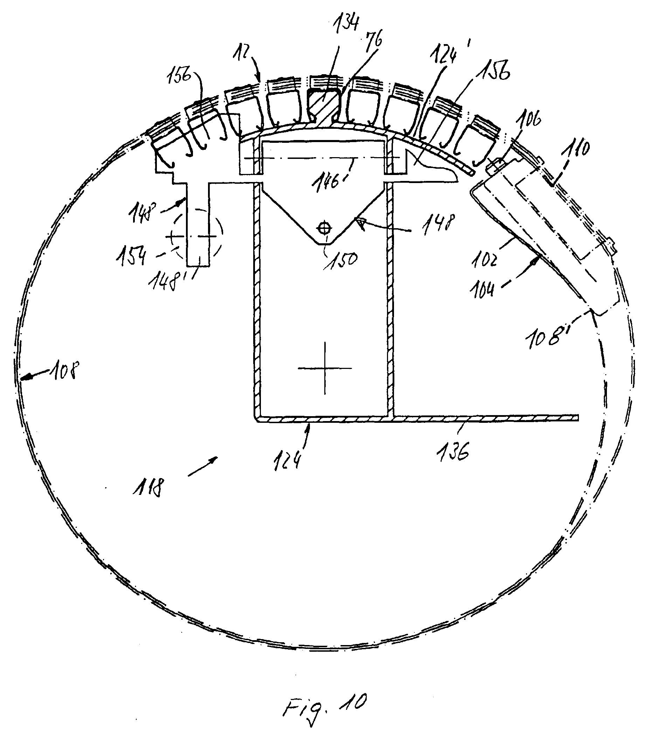

Wie dies aus den Fig. 9 und 10 hervorgeht, ist der Querschnitt des profilartigen Trägergehäuses 124 annähernd rechteckförmig, wobei die obenliegende Wand 124' über die Seitenwände hinausreichende Vorsprünge aufweist und eine kreisbogenartige Form hat. Die obenliegende Wand bildet somit ein Abschnitt einer Kreiszylindermantelfläche, deren Querschnitt der Mantelfläche 68 des Aufnahmeelements 64 entspricht. Sie ist dazu bestimmt, ein Vorrat von stirnseitig aneinander anliegenden Innenbriden 112 aufzunehmen, wie dies in der Fig. 7 und in der Fig. 10 strichpunktiert angedeutet ist. Die obenliegende Wand 124' weist eine in Richtung gegen oben vorstehende, in Umfangsrichtung gesehen mittig angeordnete und sich in Richtung der Längsachse 118'' erstreckende Halteleiste 134 auf, die von der jeweils mittleren Klammer 76 der Innenbriden 112 umgriffen ist. Durch Einrasten der freien Klammerenden in Nuten in der Halteleiste 134 sind die Innenbriden 12 in Umfangsrichtung und in radialer Richtung gehalten, wohl aber in Richtung der Längsachse 118'' verschiebbar geführt.

Vom Trägergehäuse 124 steht seitlich auslegerartig eine Tragplatte 136 ab, an der ein Linearantrieb 138 befestigt ist. Dieser ist an einen einen Mitnahmebügel 140 aufweisenden Mitnahmewagen 142 gekuppelt, welcher an einer in der entsprechenden Seitenwand des Trägergehäuses 124 angeformten Schiene 144 in Richtung der Längsachse 118'' verfahrbar geführt ist. Der Mitnahmebügel 140 überspannt mit Abstand die obenliegende Wand 124' des Trägergehäuses und ist dazu bestimmt, die auf dem Trägergehäuse 124 lagernden Innenbriden 112 in Richtung gegen die Arbeitseinheit 30 zu bewegen.

An einer rechtwinklig zur Längsachse 118'' verlaufenden, am Trägergehäuse 124 befestigten Lagerachse 146 ist ein Zurückhaltehebel 148 schwenkbar gelagert, welcher aus einer in der Fig. 7 gezeigten Halteposition, in welcher er am der Arbeitseinheit 30 zugewandten freien Ende des Trägergehäuses 124 über die obenliegende Wand 124' vorsteht, in eine in der Fig. 8 gezeigte Freigabeposition, in welcher er unter die obenliegende Wand 124' verschwenkt ist, und wieder zurück verschwenkt werden kann. Er ist in Richtung der Halteposition durch eine Zugfeder 150 vorgespannt, die einerends an einem Bolzen 152 gehäusefest abgestützt und andernends am Zurückhaltehebel 148 im Innern des Trägergehäuses 124 befestigt ist, wie dies die Fig. 8 und 10 zeigen. Entgegen der Kraft der Zugfeder 150 ist der Zurückhaltehebel 148 mittels eines Zylinder-Kolbenaggregats 154 in die Freigabeposition verschwenkbar. Das Zylinder-Kolbenaggregat 154 ist seitlich des Trägergehäuses 124 befestigt und an einem nach unten vorstehenden Lappen 148' des Zurückhaltehebels 148 angelenkt. Wie dies der Fig. 10 entnehmbar ist, weist der Zurückhaltehebel 148 zwei quer zur Längsachse 118'' beabstandete Haltelappen 156 auf, die in Halteposition über die obenliegende Wand 124' vorstehen. Der Abstand dieser Haltelappen 156 ist derart gewählt, dass der Bridenhaltehebel 70 am Aufnahmeelement 64 dazwischen Platz findet.

Der Vollständigkeit halber sei erwähnt, dass der Zurückhaltehebel 148 auch von Hand in die Freigabeposition bewegt werden kann, beispielsweise zum Auffüllen der Magazineinheit 188' mit Innenbriden 12 und in dieser Position durch Einstecken eines Stifts 158 vorübergehend fixiert werden kann.

Unterhalb des Trägergehäuses 124 steht vom Wagenkasten 126 ein Stützbügel 160 ab, der dazu bestimmt ist, bei abgekoppelten Magazinwagen 118 am Boden anzuliegen und diesen abzustützen.

Die Funktionsweise der Vorrichtung 10 mit der Magazineinheit 118' beim Montieren von Innenbriden 12 ist wie folgt: Das Kanalroboterfahrzeug 18 wird beispielsweise mittels eines Kranes in einen ersten Schacht abgesenkt und dann ferngesteuert durch ein von diesem Schacht ausgehendes Rohr 114, mit dem Drehteller 26 voraus, ferngesteuert zu einem zweiten Schacht verfahren. In diesem zweiten Schacht wird die Arbeitseinheit 30 mittels des Bajonettverschlusses 28 am Drehteller 26 befestigt und werden die Anschlüsse 32 für Steuer- und Sensorsignale als auch für Druckluft angeschlossen. Dies kann grundsätzlich auch im ersten Schacht geschehen, wobei dann das Kanalroboterfahrzeug 18 mit der angebauten Arbeitseinheit 30 voraus durch das Rohr 14 zum zweiten Schacht verfahren wird. Hier wird von Hand bei in Ruhestellung 70' verschwenktem Bridenhaltehebel 70 eine Innenbride 12 derart aufgesetzt, dass sie den Hohlschaft 80 und das sich in Ausgangslage 94 befindliche Halteelement 88 sowie die in der Mitte angeordnete Klammer 76 die Haltenase 74 umfasst; siehe Fig. 2 und 5. Nach dem Verschwenken des Bridenhebels 70 in die Haltestellung 70'' wird durch Aktivieren des Zylinder-Kolbenaggregats 92 das Halteelement 88 in Eingriffslage 94' in radialer Richtung gegen aussen verfahren, wodurch die sich in Offenstellung befindlichen Haltebacken 96 die entsprechenden Durchlässe des Bridenbandes 108 durchgreifen und dieses nach Verschwenken der Haltebacken 96 in Schliessstellung festhalten.

Anschliessend wird der mit dem Vorrat an Innenbriden 12 bestückte Magazinwagen 118 als Magazineinheit 118' in den zweiten Schacht abgesenkt und an die Arbeitseinheit 30 durch Verbinden des Anlenkstabs 116 mit dem Kardangelenk 114 und dem Anschliessen der Steuer- und Sensorleitungen an die Steckdose 120 und die Druckluftleitung an die Pneumatikkupplung 122, wie dies in der Fig. 7 angedeutet ist, angekoppelt. Nun wird die Vorrichtung 10 in Pfeilrichtung R durch das Rohr 14 ferngesteuert in jene Position verfahren, wo die erste Innenbride 12 zu setzen ist. Nun wird, falls notwendig, der Drehteller 26 in die gewünschte Drehlage verbracht, so dass die Klammern 76 in die gewünschte Stellung zu liegen kommen. Nach dem Verschwenken der Stützhebel 40 von der Ruhestellung in die Stützstellung, vergleiche Fig. 3, wird das Halteelement 88 in Aufweitrichtung der Innenbride 112, in der Fig. 5 im Gegenuhrzeigersinn, gedreht und in radialer Richtung gegen aussen verfahren. Entsprechend der dadurch erzielten Umfangsvergrösserung der Innenbride 12 wird auch das Aufnahmeelement 64 in radialer Richtung gegen aussen bewegt. Diese Bewegungen können simultan oder schrittweise nacheinander erfolgen, bis die Innenbride 12 an der Rohrinnenwand 14' anliegt; dies ist in Fig. 6 gezeigt. Nun wird der Spannverschluss 104 entriegelt, indem durch Aktivieren des weiteren Zylinder-Kolbenaggregats 98 die Schlagmasse 100 auf den Verriegelungsbügel 102 zur Einwirkung gebracht wird. Durch die dadurch freigegebene Kraft der Feder des Spannverschlusses 104 wird das Bridenband 108 kraftschlüssig an die Rohrwand 40' angedrückt. Nach dem Freigeben des Bridenbandes 108 durch Verbringen der Haltebacken 96 in Offenstellung und Zurückbewegen des Halteelements 88 in die radial innenliegende Ausgangslage 94 sowie Verschwenken des Bridenhaltehebels 70 in Ruhestellung 70', wird das Zylinder-Kolbenaggregat 72' aktiviert, um mittels des Stössels 78 den Sitz der Innenbride 12 zu überprüfen. Anschliessend wird das Aufnahmeelement 64 in die radial inneliegende Aufnahmeposition zurückbewegt und nach Verschwenken der Stützhebel in Ruhestellung die Vorrichtung 10 zur nächsten Stelle, wo eine Innenbride 12 zu versetzen ist, verfahren.

Falls die Drehlage der Arbeitseinheit 30 nicht mit jener des Magazinwagens 118 übereinstimmt, wird nun die Arbeitseinheit 30 durch Antrieb des Drehtellers 26 in die gewünschte Drehlage verbracht. Zu diesem Zweck dienen die Signale des Sensors 132. Sobald nun die Haltenase 74 mit der Halteleiste 134 fluchtet, wird das Zylinder-Kolbenaggregat 130 aktiviert, um den Magazinwagen 118 von der in der Fig. 7 gezeigten Ruhestellung in die in der Fig. 8 gezeigte Übergabestellung heranzubringen, in welcher die Stirnseiten des Aufnahmeelements 64 und der obenliegenden Wand 124' nahe beieinander liegen. Für die Übergabe einer Innenbride 12 vom Magazinwagen 118 an das Aufnahmeelement 64 wird nun durch Aktivieren des Zylinder-Kolbenaggregats 154 der Zurückhaltehebel 148 in Freigabeposition verschwenkt und der Linearantrieb 138 aktiviert, wodurch der Mitnahmebügel 140 sämtliche Innenbriden 112 um einen Platz in Richtung gegen die Arbeitseinheit 30 verschiebt und gleichzeitig die dieser nächstgelegenen Innenbride 12 mit der Klammer 76 auf die Haltenase 74 verschiebt. Nach dem Verschwenken des Bridenhaltehebels 70 in die Haltestellung 70'' und des Zurückhaltehebels 148 in seine Halteposition, wird mittels des Zylinder-Kolbenaggregats 130 der Magazinwagen 118 wieder in Richtung von der Arbeitseinheit weg in die Ruhestellung zurückbewegt.

Nach dem Erfassen des Bridenbandes 108 mittels des Halteelements 88 kann nun diese von der Arbeitseinheit 30 gehaltene Innenbride 12 wie vorgängig beschrieben montiert werden.

Zum Auffüllen des Magazinwagens 118 mit einem neuen Vorrat an Innenbriden 12, wird die gesamte Vorrichtung zu einem Schacht verfahren, der Magazinwagen 118 abgekoppelt und mit neuen Innenbriden 12 durch Aufschieben auf die Halteleiste 134 versehen, dies nachdem der Mitnahmewagen 142 in die in der Fig. 7 gezeigte Aufstellung zurückverfahren worden ist.

Der Vollständigkeit halber sei erwähnt, dass die genannten Funktionen mittels der an der Arbeitseinheit 30 angeordneten, nicht gezeigten TV-Kamera überwacht werden.

Der Vollständigkeit halber sei erwähnt, dass die Bewegungsbahn des Aufnahmeelements 64 sowie des Halteelements 88 in derselben rechtwinklig zur Längsachse 18' verlaufenden Ebene liegen.

## Patentansprüche

1. Vorrichtung zum Montieren einer Innenbride in einem nichtbegehbaren Rohr, mit einem an der Rohrinnenwand (14') in Rohrlängsrichtung (R) beweglich abstützbaren Gestell (16), einem am Gestell (16) bezüglich dessen Längsrichtung (18') radial bewegbar angeordneten Aufnahmeelement (64) zum Halten eines Abschnitts der Innenbride (12), einem am Gestell (16) in radialer Richtung und in Umfangsrichtung bewegbar angeordneten Halteelement (88) zum Halten eines weiteren Abschnitts (108') der Innenbride (12), sowie Antriebsmittel (60; 34), die zum Montieren der Innenbride (12) durch Aufweiten das Aufnahmeelement (64) und das Halteelement (88) in radialer Richtung gegen aussen und das Halteelement (88) zusätzlich in Umfangsrichtung bewegen.

2. Vorrichtung nach Anspruch 1, dadurch gekennzeichnet, dass das Halteelement (88) zum formschlüssigen Eingriff mit dem weiteren Abschnitt der Innenbride (12) zangenartig ausgebildet ist.

3. Vorrichtung nach Anspruch 1 oder 2, dadurch gekennzeichnet, dass die Bewegungsbahnen des Aufnahmeelements (64) und des Halteelements (88) in einer rechtwinklig zur Längsrichtung (18') verlaufenden Ebene liegen.

4. Vorrichtung nach einem der Ansprüche 1 bis 3, dadurch gekennzeichnet, dass das Halteelement (88) um die Längsachse (18') des Gestells (16) drehbar angeordnet ist und das Gestell (16) Stützelemente (40,42) aufweist, die von einer Ruhestellung in eine Stützstellung, in der sie an der Rohrinnenwand (14') anliegen, bewegbar sind und in Stützstellung die Längsachse (18') wenigstens annähernd in der Mittelachse des Rohres (14) liegen.

5. Vorrichtung nach einem der Ansprüche 1 bis 4, dadurch gekennzeichnet, dass das Gestell (16) ein selbstfahrendes Kanalroboterfahrzeug (18) mit einer Dreheinrichtung zum Drehen des Aufnahmeelements (64) um die Längsachse (18') aufweist.

6. Vorrichtung nach Anspruch 5, dadurch gekennzeichnet, dass die Dreheinrichtung ein stirnseitig des Kanalroboterahrzeuges (18) angeordnetes, um die Längsachse (18') drehbares Tragelement (26) aufweist, an dem das Aufnahmeelement (64) und das Halteelement (88) angeordnet sind.

7. Vorrichtung nach den Ansprüchen 4 und 6, dadurch gekennzeichnet, dass die Stützelemente (40,42) am Tragelement angeordnet sind.

8. Vorrichtung nach einem der Ansprüche 1 bis 7, gekennzeichnet durch eine Magazineinrichtung (118') mit einem in Längsrichtung (118'') verlaufenden Führungselement (134) zum Aufnehmen einer Mehrzahl von Innenbriden (12) und einem Antriebselement (138,140,142) zum Verschieben der Innenbriden (12) in Richtung gegen das Aufnahmeelement (64).

9. Vorrichtung nach Anspruch 8, gekennzeichnet durch ein weiteres Antriebselement (130), das dazu bestimmt ist, das Führungselement (134) in Längsrichtung (118'') von einer vom Aufnahmeelement (64) entfernten Ruhestellung auf das Aufnahmeelement (64) zu in eine Übergabestellung zu bewegen, um dann mittels des Antriebselements (138,140,142) eine Innenbride (12) vom Führungselement (134) dem Aufnahmeelement (64) zuzuschieben.

10. Vorrichtung nach Anspruch 8 oder 9, dadurch gekennzeichnet, dass die Magazineinrichtung (118') an der Arbeitseinheit (30) drehbeweglich angelenkt ist und Räder (128) zum beweglichen Abstützen an der Rohrinnenwand (14') aufweist.

11. Vorrichtung nach Anspruch 10, gekennzeichnet durch einen Sensor (132) zum Erkennen der relativen Drehlage zwischen der Magazineinrichtung (118') und dem Aufnahmeelement (64).

12. Vorrichtung nach einem der Ansprüche 1 bis 11, gekennzeichnet durch ein Betätigungselement (72',100) zum Betätigen eines Spannverschlusses (104) der Innenbride (12).

13. Innenbride, die mittels der Vorrichtung nach einem der Ansprüche 1 bis 12 in einem Rohr montierbar ist, mit einem spiralartig gebogennen, sich überlappenden Bridenband (108), das einerends einen Spannverschluss (104) und andernends Durchlässe zum Zusammenwirken mit dem Halteelement (88) aufweist, wobei ein Abschnitt des Bridenbandes (12) durch den Spannverschluss (104) hindurchverläuft und beim Aktivieren des Spannverschlusses (104) zum Zusammenwirken mit diesem bestimmt ist, sowie ein vorzugsweise an den Spannverschluss (104) anschliessender Bandabschnitt bestimmt ist, mit dem Aufnahmeelement (64) zusammenzuwirken.

14. Innenbride nach Anspruch 13, gekennzeichnet durch in einem, vorzugsweise an den Spannverschluss (104) anschliessenden Bandabschnitt am Bridenband (108) in gleichmässigem Abstand befestigten Klammern (76), die zum Aufnehmen und Halten eines Kabels oder Rohres bestimmt sind, wobei mindestens eine der Klammern (76) weiter dazu bestimmt ist, mit dem Aufnahmeelement (64) zusammenzuwirken.
